# EUROPEAN PATENT APPLICATION

(11) **EP 2 164 039 A1**
(43) Date of publication of application: **17.03.2010**
(21) Application number: 09011559.3
(22) Date of filing: 09.09.2009
(51) Int. Cl.: G06T 3/40

(54) **Image processing apparatus, imaging apparatus, image processing method and computer program product for the same**

(30) Priority: 10.09.2008 JP 2008231941
(71) Applicant: Fujifilm Corporation, Tokyo 106-8620 (JP)
(72) Inventor: Tomono, Masafumi, Ashigarakami-gun Kanagawa 258-8538 (JP)
(74) Representative: Metzler, Volker

(57) **Abstract**

An image processing apparatus comprises an obtaining device for obtaining a series of images taken by serially picking up images of an object; and a mosaicking process device for generating a synthesized image by combining the series of images obtained by the obtaining device; wherein the mosaicking process device comprises: a coordinate obtaining device for obtaining representative coordinates for each one of the series of images obtained by the obtaining device; an extracting device for extracting an image to be excluded from objects of a mosaicking process from the series of images obtained by the obtaining device, based on a locus of the representative coordinates of each image obtained by the coordinate obtaining device; and a synthesized image generating device for generating an image that is the series of images excluding the image extracted by the extracting device combined as the synthesized image.

## Description

### BACKGROUND OF THE INVENTION

### Field of the Invention

The present invention relates to an image processing apparatus, an imaging apparatus, an image processing method, and a computer program product for the same. More particularly, the present invention relates to an image processing apparatus, an imaging apparatus, an image processing method, and a computer program product for the same that generate a synthesized image by combining frames of a moving image or the like.

### Description of the Related Art

Japanese Patent Application Laid-Open No. 2003-9144 and Japanese Patent Application Laid-Open Publication No. H10-509571 describe techniques for generating a synthesized image by extracting frames from a moving image and combining the frames.

### SUMMARY OF THE INVENTION

However, a moving image is highly likely to contain a frame affected by camera shake or a frame unintended by a user. Therefore, when performing a mosaicking process by using all the frames contained in the moving image, as techniques described in Japanese Patent Application Laid-Open No. 2003-9144 and Japanese Patent Application Laid-Open Publication No. H10-509571, it is highly likely to provide a synthesized image that is not intended by the user.

Such an unsatisfactory image may be highly possible to be taken especially at the start and end of imaging when the user presses a button.

The present invention is adapted in view of such circumstances with an object to provide an image processing apparatus, an imaging apparatus, an image processing method, and a computer program product for the same that are capable of automatically removing a frame possibly unintended by the user from a mosaicked result.

The image processing apparatus according to the first aspect of the present invention is an image processing apparatus, including: an obtaining device for obtaining a series of images taken by serially picking up images of an object; and a mosaicking process device for generating a synthesized image by combining the series of images obtained by the obtaining device; wherein the mosaicking process device comprises: a coordinate obtaining device for obtaining representative coordinates for each one of the series of images obtained by the obtaining device; an extracting device for extracting an image to be excluded from objects of a mosaicking process from the series of images obtained by the obtaining device, based on a locus of the representative coordinates of each image obtained by the coordinate obtaining device; and a synthesized image generating device for generating an image that is the series of images excluding the image extracted by the extracting device combined as the synthesized image.

According to the image processing apparatus of the first aspect, a synthesized image is generated by combining a series of images that is taken by serially picking up images of an object, for example, a moving image. When generating the synthesized image, the image processing apparatus obtains representative coordinates, for example, center point coordinates for each one of the series of images. The image processing apparatus extracts an image to be excluded from objects of a mosaicking process from the series of images based on a locus of the representative coordinates that shows how the representative coordinates change, and generates an image that is the series of images excluding the extracted image combined as the synthesized image. In that manner, the image processing apparatus can exclude an image suffering from camera shake caused by a movement of operating a button or a user's hand or body movement from the objects of the mosaicking process. Therefore, the image processing apparatus is capable of generating a synthesized image that is close to what is intended by the user.

The image processing apparatus according to the second aspect of the present invention is the image processing apparatus according to the first aspect, wherein the extracting device extracts an image contained in a region in which the locus of the representative coordinates changes as large as or larger than a predetermined extent, as the image to be excluded.

According to the image processing apparatus of the second aspect, a region in which the locus of the representative coordinates changes as large as or larger than a predetermined extent, for example, an image suffering from camera shake caused by a user's hand or body movement or a movement of pressing a button, can be excluded from objects of the mosaicking process.

The image processing apparatus according to the third aspect of the present invention is the image processing apparatus according to the first or the second aspect, wherein the extracting device searches for a region in which the locus of the representative coordinates changes from a predetermined direction to another direction different from the predetermined direction in the locus of the representative coordinates for images in a predetermined range from an image taken last in the series of images obtained by the obtaining device, and extracts all images contained in the region and thereafter as the images to be excluded.

According to the image processing apparatus of the third aspect, all images in the region, in which the locus of the representative coordinates changes from a predetermined direction to another direction different from the predetermined direction, and thereafter are excluded from the objects of the mosaicking process for the images in a predetermined range from the image taken last in the series of images. For example, a time when the locus of the representative coordinates changes from an almost horizontal direction to an almost obliquely downward direction may corresponds to a time when the user pressed a button on the top of the camera. By excluding the region in which the locus of the representative coordinates changes from the almost horizontal direction to the almost obliquely downward direction and the region thereafter from the objects of the mosaicking process, the image processing apparatus can exclude all images taken while the user was pressing a button from the objects of the mosaicking process.

The image processing apparatus according to the fourth aspect of the present invention is the image processing apparatus according to any one of the first to the third aspects, wherein the coordinate obtaining device obtains coordinates of each one of four corners for each one of the series of images, the synthesized image generating device includes a determining device for determining whether two of images other than the images extracted to be excluded from the objects of the mosaicking process overlap each other at least partly or not, based on the coordinates of four corners obtained by the coordinate obtaining device, wherein the two images are adjacent to the extracted image, and when the determining device determines that two adjacent images overlap each other at least partly, the synthesized image generating device combines the two adjacent images.

According to the image processing apparatus of the fourth aspect, coordinates of each one of four corners for each one of the series of images are obtained, and based on the obtained coordinates of four corners, whether two images adjacent to the image extracted to be excluded from the objects of the mosaicking process overlap each other at least partly or not is determined. If the adjacent two images overlap each other at least partly, the image processing apparatus combines the two images. In that manner, the image processing apparatus can prevent the synthesized image from being partly missing.

The image processing apparatus according to the fifth aspect of the present invention is the image processing apparatus according to the fourth aspect, further including a device for selecting an image that overlaps both of the two adjacent images at least partly from the images to be excluded from the objects of the mosaicking process, when the determining device determines that two adjacent images do not overlap each other even partly, wherein the extracting device removes the selected image from the images to be excluded from the objects of the mosaicking process and treats the remaining images as the images to be excluded from the objects of the mosaicking process.

According to the image processing apparatus of the fifth aspect, when the adjacent two images do not even partly overlap each other, an image that overlaps both of the two adjacent images at least partly is selected from the images to be excluded from the objects of the mosaicking process, and the selected image is removed from the images to be excluded from the objects of the mosaicking process. In that manner, the image processing apparatus can prevent the synthesized image from being partly missing.

The image processing apparatus according to the sixth aspect of the present invention is the image processing apparatus according to any one of the first to the fifth aspects, further including an outputting device for outputting the synthesized image generated by the synthesized image generating device to a monitor or a paper medium. In that manner, the image processing apparatus can display the generated synthesized image to the user.

An imaging apparatus according to the seventh aspect of the present invention includes: the image processing apparatus according to any one of the first to the sixth aspects; and an image pickup device which picks up an image of an object.

An image processing method according to the eighth aspect of the present invention, includes steps of: obtaining a series of images taken by serially picking up images of an object; generating a synthesized image by combining the obtained series of images; obtaining representative coordinates of each one of the obtained series of images; extracting an image to be excluded from objects of a mosaicking process from the obtained series of images, based on a locus of the representative coordinates showing how the representative coordinates of the obtained images vary; and excluding the extracted image from the generated synthesized image.

The above described aspects of the present invention may be provided as a computer program code, a computer readable storage medium including the computer program code and a computer program product including the computer readable storage medium.

A computer program product according to the ninth aspect of the present invention includes: a computer readable storage medium having computer readable program code embodied therein, the computer readable program code including: computer-readable program code for causing a computer to obtain a series of images taken by serially picking up images of an object; computer-readable program code for causing the computer to generate a synthesized image by combining the obtained series of images; computer-readable program code for causing the computer to obtain representative coordinates of each one of the obtained series of images; computer-readable program code for causing the computer to extract an image to be excluded from objects of a mosaicking process from the obtained series of images, based on a locus of the representative coordinates showing how the representative coordinates of the obtained images vary; and computer-readable program code for causing the computer to exclude the extracted image from the generated synthesized image.

According to the present invention, a frame possibly unintended by the user can be automatically removed from a mosaicked result.

### BRIEF DESCRIPTION OF THE DRAWINGS

Fig. 1 is a block diagram of an image processing apparatus 1 to which the present invention is applied;
Fig. 2 is a flowchart showing a flow of a mosaicking process;
Fig. 3 is a schematic diagram showing the mosaicking process;
Fig. 4 is a table showing a data structure in saving coordinates of each frame;
Fig. 5 is a diagram showing a locus of center point coordinates of frames near a start frame;
Fig. 6 is a diagram showing a locus of center point coordinates of frames near an end frame;
Fig. 7 is a diagram showing a locus of center point coordinates of frames other than the frames near the start frame and the frames near the end frame;
Fig. 8 is a flowchart showing a process flow of a step of deleting a frame to be deleted (step S50);
Figs. 9A, 9B, 9C, 9D, and 9E are diagrams showing a case in which frames before and after a group of frames to be deleted do not overlap each other; and
Figs. 10A and 10B are diagrams showing a case in which frames before and after a group of frames to be deleted overlap each other.

### DETAILED DESCRIPTION OF THE PREFERRED EMBODIMENTS

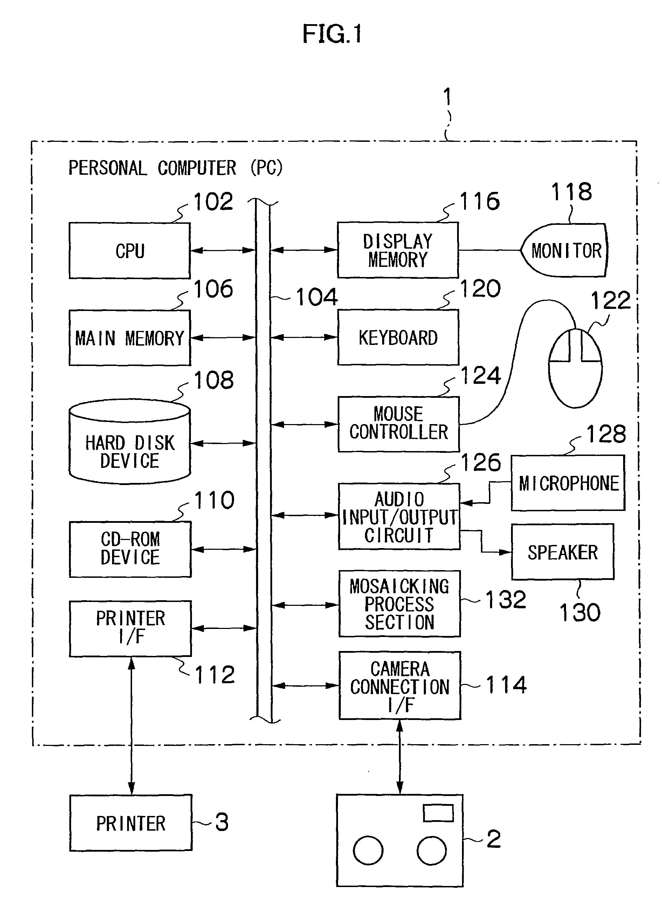

Fig. 1 is a schematic diagram showing a general structure of an image processing apparatus 1 according to the embodiment. The image processing apparatus 1 is a personal computer (PC) which is capable of performing such operations as recording, editing, and the like on an image.

The image processing apparatus 1 includes a central processing unit (CPU) 102, a bus 104, a main memory 106, a hard disk device 108, a CD-ROM device 110, a printer interface section (printer I/F) 112, a camera connection interface section (camera connection I/F) 114, a display memory 116, a monitor 118, a keyboard 120, a mouse 122, a mouse controller 124, an audio input/output circuit 126, a microphone 128, a speaker 130, a mosaicking process section 132, and the like.

The CPU 102 is connected to each block in the image processing apparatus 1 via the bus 104 to control operation of the block.

The main memory 106 includes a storage area for storing control programs, and a work area for use when the program is running.

The hard disk device 108 stores an operating system (OS) of the image processing apparatus 1, various kinds of application software, image data for record loaded from an imaging apparatus 2, and the like.

The CD-ROM device 110 reads data from a CD-ROM (not shown).

The printer I/F 112 outputs a still image stored in the hard disk device 108, and a synthesized image generated by the mosaicking process section 132 to a printer 3.

The camera connection I/F 114 transmits data to an imaging apparatus (electronic camera, digital camera) 2, and receives data from the imaging apparatus 2. The imaging apparatus 2 is capable of taking not only a still image but also a moving image.

The display memory 116 temporarily stores display data.

The monitor 118 is a CRT (Cathode Ray Tube) monitor or a liquid crystal monitor, for example, and displays an image, text, and the like based on image data, text data, and the like outputted from the display memory 116.

The keyboard 120 and the mouse 122 receive an instruction from an operator and input a signal corresponding to the instruction to the CPU 102. Other than the mouse 122, a touch panel, a touch pad, or the like may be used as a pointing device.

The mouse controller 124 detects a status of the mouse 122 and outputs signals indicating the position of a mouse pointer on the monitor 118, the status of the mouse 122 and the like to the CPU 102.

The microphone 128 and the speaker 130 are connected to the audio input/output circuit 126, various audio signals are input to the audio input/output circuit 126. Also, the audio input/output circuit 126 replays and outputs various audio sounds for the operations on the keyboard 120 and the like by the operator in inputting an instruction.

The mosaicking process section 132 generates a synthesized image (for example, a panoramic image) by executing the mosaicking process of dividing the moving image stored in the hard disk device 108 into frames and combining the frames. The mosaicking process section 132 includes a work area for use for the mosaicking process and a memory area.

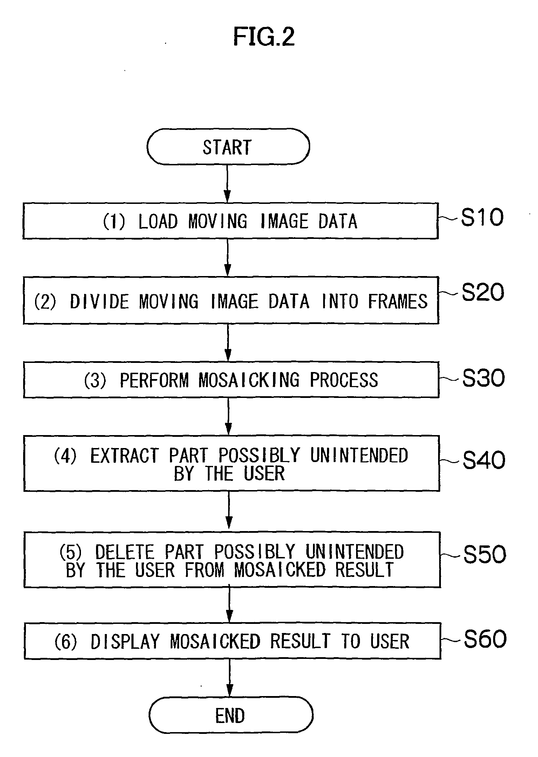

The mosaicking process section 132 according to the present invention is characterized by combining frames obtained by dividing the moving image excluding an unwanted frame, i.e., the frame possibly unintended by a user, instead of combining all the frames obtained by dividing the moving image. A process performed by the mosaicking process section 132 to combine the frames excluding the frame possibly unintended by the user will be described below with reference to a flowchart shown in Fig. 2.

The CPU 102 obtains moving image stored in the imaging apparatus 2 via the camera connection I/F 114, and stores the moving image in the hard disk device 108 (step S10). The mosaicking process section 132 obtains the moving image from the hard disk device 108, and divides the moving image into frames (step S20).

The mosaicking process section 132 performs the mosaicking process of combining the each divided frames (step S30). Since the mosaicking process performed in step S30 is a general mosaicking process and various publicly known methods (for example, a method described in Japanese Patent Application Laid-Open No. 2003-9144) may be applied to the process, the detailed description of the process is omitted.

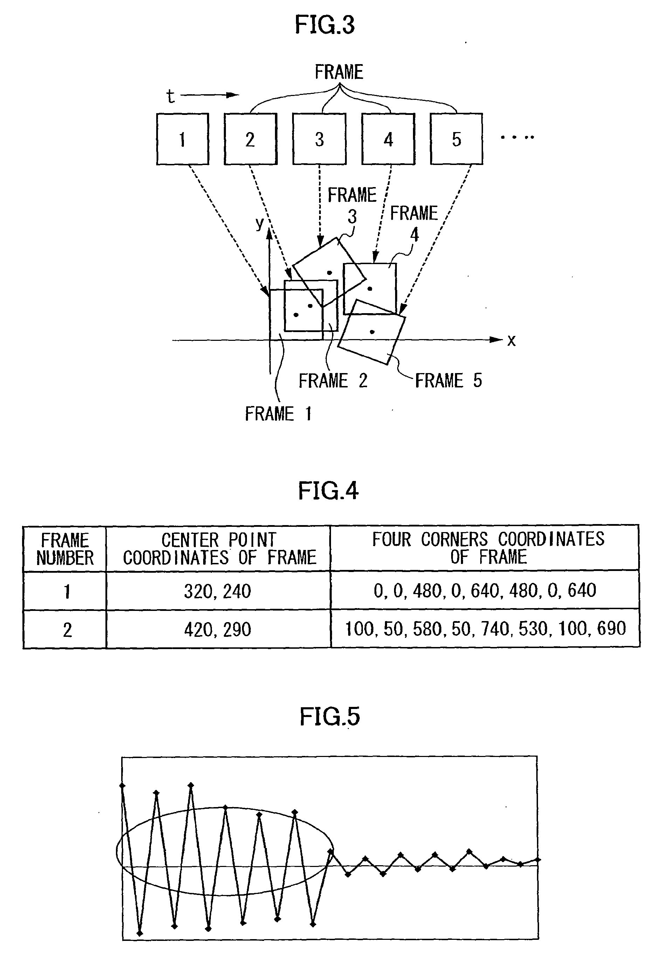

The mosaicking process section 132 numbers the divided frames in the picked up order (photographed order) as shown in Fig. 3 during the mosaicking process (step S30). Also as shown in Fig. 3, the mosaicking process section 132 obtains the center point coordinates and the coordinates of four corners of each frame relative to the origin set at the coordinates of the lower left corner of the first frame (the frame numbered 1). Methods for obtaining the center point coordinates and the coordinates of four corners include (1) a method of directly obtaining the center point coordinates and the coordinates of four corners, (2) a method of obtaining the coordinates of four corners and calculating the center point coordinates based on the obtained coordinates of four corners, (3) a method of obtaining the coordinates of a predetermined corner and the center point coordinates, and calculating the coordinates of the remaining three corners based on the obtained coordinates of the corner and the center point coordinates, (4) a method of obtaining the coordinates of predetermined diagonal two corners, and calculating the coordinates of the remaining two corners and the center point coordinates based on the obtained coordinates of the two corners, and (5) a method of obtaining the coordinates of a predetermined corner and the size of the frame, and calculating the coordinates of the remaining three corners and the center point coordinates based on the obtained coordinates of the corner and the size of the frame. Although the embodiment uses (1) the method of directly obtaining the center point coordinates and the coordinates of four corners, it is needless to say that any method may be used. The coordinates may be obtained relative to the origin set at the coordinates of the lower left corner of the first frame, at the coordinates of any one of the other three corners of the first frame, or at the center point coordinates of the first frame.

The center point coordinates and the coordinates of the corner obtained in that manner are stored in the memory area of the mosaicking process section 132 in association with the frame numbers as shown in Fig. 4.

Next, the mosaicking process section 132 extracts a part possibly unintended by the user, based on the center point coordinates of the frames (step S40). The part possibly unintended by the user is a part suffering from camera shake caused by a user's movement of pressing a button or camera shake that is too large for a camera shake compensation function of the imaging apparatus 2 to compensate for. The method for extracting the part possibly unintended by the user will be described with reference to Figs. 5 to 7. Figs. 5 to 7 are diagrams that plot the center point coordinates of the frames obtained in step S30 in which the x-coordinate of the center point is plotted on the abscissa (x-axis), and the y-coordinate of the center point is plotted on the ordinate (y-axis), illustrating the loci of the respective center point coordinates that show how the center point coordinates vary.

Fig. 5 shows the locus of the center point coordinates in a region near the start frame of the moving image. The region near the start frame means a range within, for example, one second from the start frame. In the region near the start frame, a region in which the locus of the center point coordinates largely changes, i.e., the camera shake occurs with a short cycle and amplitude is wider than a predetermined width, like that encircled in Fig. 5, is determined as the region suffering from camera shake caused by a user's movement of pressing a button. Then, all frames contained in the region in which the locus of the center point coordinates largely changes are categorized as a group of frames to be deleted. The group of frames is defined by the number of the first frame to be deleted and the number of the last frame to be deleted.

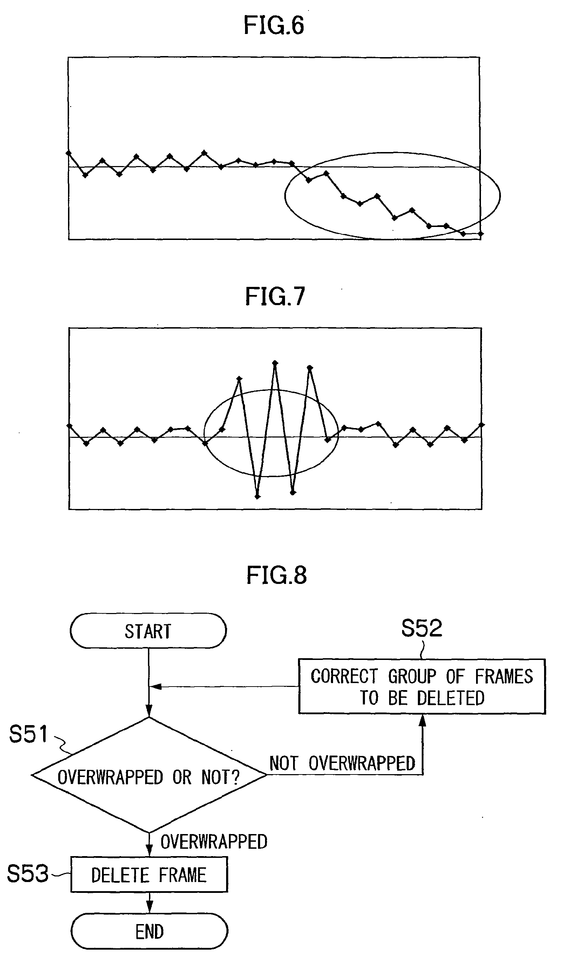

Fig. 6 shows the locus of the center point coordinates in a region near the end frame of the moving image. The region near the end frame means a range within, for example, one second from the end frame. In the region near the end frame, a region in which the locus of the center point coordinates inclines at an angle largely different from an angle of the locus of the center point coordinates in several frames before the region near the end frame, for example, the region in which the locus of the center point coordinates changes its direction to obliquely to the lower right in the region near the end frame in contrast with the region before the region near the end frame in which the locus of the center point coordinates keeps in the almost rightward direction, as a region encircled in Fig. 6, is determined as the region suffering from camera shake caused by a user's movement of pressing a button. Then, all the frames in the region in which the locus of the center point coordinates inclines at an angle largely different from an angle of the locus of the center point coordinates in several frames before the region near the end frame and thereafter are categorized as a group of frames to be deleted.

Fig. 7 shows a locus of the center point coordinates in a region other than the region near the start frame and the region near the end frame. In the region other than the region near the start frame and the region near the end frame, a region in which the locus of the center point coordinates largely changes, i.e., the camera shake occurs with a short cycle and amplitude wider than a predetermined width, as a region encircled in Fig. 7, is determined as the region suffering from camera shake caused by user's hand or body movement. Then, all frames contained in the region in which the locus of the center point coordinates largely changes are categorized as a group of frames to be deleted.

Here, the process of extracting a part possibly unintended by the user (step S40) has ended. Since the synthesized image is generated by using the frames without suffering from camera shake caused by a user's movement of pressing a button or a user's hand or body movement in the above-described manner, the embodiment can avoid generating a synthesized image the user has not intended.

Then, the mosaicking process section 132 deletes the group of frames to be deleted that is extracted in step S40 from the synthesized image generated in step S30 (step S50). Fig. 8 is a flowchart showing a process flow of a process by the mosaicking process section 132 to delete a group of frames to be deleted from the synthesized image (step S50).

Based on the coordinates of four corners of each frame stored in the memory area of the mosaicking process section 132 (see Fig. 4) in step S30, whether the frames before and after the group of frames categorized to be deleted in step S40, i.e., the adjacent frames to be synthesized overlap each other or not is determined (step S51). Whether the frames overlap each other or not is determined by obtaining the positions (regions) of the frames before and after the group of frames categorized to be deleted, i.e., the adjacent frames to be synthesized, based on the coordinates of the four corners of the frames thereof and determining whether the obtained regions overlap each other or not.

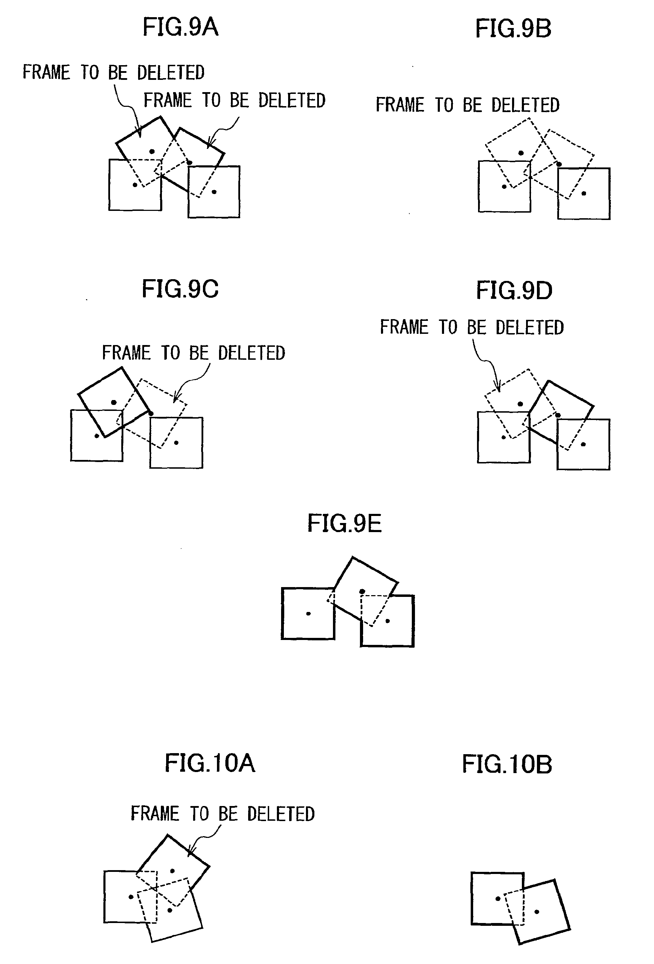

The case in which the frames before and after the group of frames categorized to be deleted, i.e., the adjacent frames to be synthesized do not overlap each other (step S51) is a case in which two images in the middle of the four serial frames are included in the group of frames to be deleted, as shown in Fig. 9A, for example. If the group of frames to be deleted is not used in that case, the frames before and after the group of frames categorized to be deleted do not overlap each other, as shown in Fig. 9B. In other words, the adjacent frames to be synthesized do not overlap each other.

Therefore, when it is determined that the frames before and after the group of frames categorized to be deleted, i.e., the adjacent frames to be synthesized do not overlap each other (step S51), a correction is made so that a desired frame in the group of frames to be deleted is removed from the objects to be deleted and added to the objects to be synthesized, leaving the remaining images in the group of frames to be deleted (step S52). For example, as shown in Fig. 9C, the first frame in the group of frames to be deleted (the second frame of the second and third frames) is removed from the objects to be deleted so that the three frames of the first and last frames originally to be synthesized and the second frame that is removed from the objects to be deleted are categorized as the frames to be synthesized.

Then, whether the adjacent frames to be synthesized overlap each other or not is determined again (step S51). When it is determined that the adjacent frames to be synthesized do not overlap each other again (step SS1), the correction is made again so that a desired frame in the group of frames to be deleted is removed from the objects to be deleted and added to the objects to be synthesized (step S52). For example, even in the case in which the first frame in the group of frames to be deleted is categorized as the objects to be synthesized as shown in Fig. 9C, the first, second and fourth frames which are the objects to be synthesized do not overlap one another. To solve the problem, the first frame (the second frame) is replaced by the last frame (the third frame) as the frame to be removed from the objects to be deleted in the group of frames to be deleted. As a result, as shown in Fig. 9D, the three frames of the first and last frames originally to be synthesized and the third frame that is removed from the objects to be deleted are categorized as the frames to be synthesized.

Then, whether the adjacent frames to be synthesized overlap each other or not is determined again (step S51). In the case shown in Fig. 9D, since the first frame and the third frame overlap each other and the third frame and the fourth frame overlap each other (step S51), the process proceeds to the deleting step (step S53). When the frames before and after the group of frames categorized to be deleted, i.e., the adjacent frames to be synthesized overlap each other as shown in Fig. 10A (step S51), the process proceeds to the deleting step (step S53).

In the deleting step S53, the synthesizing process is performed by using the three images which remain in Fig. 9E as the result of removal of the second frame, which is categorized as the frames to be deleted in Fig. 9D. As shown in Fig. 10B, the synthesizing process is performed by using the adjacent frames to be synthesized that overlap each other. In that manner, the embodiment can prevent the synthesized image from appearing unnatural by partly missing.

Here, the process of deleting the group of frames to be deleted from the synthesized image (step S50) has ended, and the synthesized image that is the mosaicked result in step S30 excluding the frame to be deleted is generated. By having the adjacent pixels overlap each other in the above-described manner, the embodiment can prevent the synthesized image from appearing unnatural by partly missing or the like.

Finally, the mosaicking process section 132 outputs information indicating that the synthesized image is generated to the CPU 102. The CPU 102 outputs the synthesized image that is generated by the mosaicking process section 132 performing steps S 10 through S50 to the monitor 118 via the display memory 116 (step S60). Accordingly, the monitor 118 displays the synthesized image for the user to check. The synthesized image may be outputted not only to the monitor 118 but also to the printer 3.

According to the embodiment, the frame possibly unintended by the user is extracted so that the synthesized image excluding the extracted frame can be generated. Therefore, the embodiment can prevent the mosaicked result from being unintentional to the user.

Although the synthesized image is generated by using the moving image obtained from the imaging apparatus 2 in the embodiment, the synthesized image may be generated by using a moving image obtained from a network that is connected to the image processing apparatus 1 via a communication interface section (communication I/F).

Although the synthesized image is generated by using the moving image obtained from the imaging apparatus 2 in the embodiment, the synthesized image may also be generated by using sequence photographs consisting of a plurality of still images that are taken by consecutive shooting or the like instead of limitedly using the moving image.

Although the embodiment is described by taking an example of the case in which the frames are taken from left to right as time passes and the locus of the center point coordinates of the frames extends in the almost rightward direction as shown in Fig. 3, the frames may be taken in various directions such as leftward, downward, upward without being limited to rightward, and the locus of the center point coordinates of the frames may change in various directions such as leftward, downward, upward instead of being limited to the almost rightward direction.

Although the part possibly unintended by the user is extracted based on the center point coordinates of the frames in step S40 in the embodiment, desired coordinates among the coordinates of the four corners of the frames, for example, may be used as the basis in extracting the part possibly unintended by the user, instead of being limited to the center point coordinates. When the rotation of the frame is taken into account, the center point coordinates are optimal as described in step S40. When the frame rotates so slightly that the rotation can be ignored, the part possibly unintended by the user can be extracted based on the coordinates of the lower left corner of the frames, for example. When the image is taken by tracking an object, the object that is continuously captured in the frame is detected by using character points or the like so that the part possibly unintended by the user can be extracted based on the center of gravity of the object.

Although the region in which the locus of the center point coordinates changes its direction from the almost rightward direction to the obliquely to the lower right direction is extracted as the region in which the locus of the center point coordinates abruptly angles in the region near the end frame of the moving image (Fig. 6) in step S40 in the embodiment, the region in which the locus of the center point coordinates abruptly angles is not limited to the above-described region and it may be any region, provided that it contains the locus of the center point coordinates changing from a predetermined direction to another direction which differs from the predetermined direction.

When a compact digital camera with a button on the top is used, camera shake caused by a movement pressing the button is extracted as the region in which the locus of the center point coordinates changes from an almost rightward direction to an obliquely to the lower right direction, as shown in Fig. 6. When the user holds the camera by rotating it by 90 degrees in the clockwise direction, the button comes on the right side. Therefore, the region suffering from camera shake caused by a movement of pressing the button is only required to be extracted as the region in which the locus of the center point coordinates changes from an almost rightward direction to the leftward direction. When the user rotates the camera by 90 degrees in the counterclockwise direction, the button comes on the left side. Therefore, the region suffering from camera shake caused by a movement of pressing the button is only required to be extracted as the region in which an interval between the center point coordinates becomes broader.

When a video camera is used, the record stop button may be on the edge of the front side of the camera. In such a case, since the camera jerks (pitches) up and down at each time when the user presses the button, the region in which the locus of the center point coordinates changes from almost rightward to obliquely upward or obliquely downward may be extracted as the region suffering from camera shake caused by a movement of pressing the button.

Although the region in which the locus of the center point coordinates largely changes, i.e., the camera shake occurs with a short cycle and amplitude wider than a predetermined width, in the region other than that near the start frame and that near the end frame, is extracted as the object to be deleted in step S40 in the embodiment, the region to be extracted as the object to be deleted is not limited to that region. For example, the user may zoom the lens while imaging a moving image. In the case of a compact digital camera with a wide button and a tele button on the backside, the camera moves like rotating sideways (yaws) or like rotating vertically (pitches) when the user operates the wide button or the tele button. Therefore, as the region suffering from the camera shake caused by a movement of zooming operation on the camera, the region in which the locus of the center point coordinates changes from an almost rightward direction to an almost leftward direction, the region in which an interval between the center point coordinates becomes broader, or the region in which the locus of the center point coordinates changes from an almost rightward direction to the obliquely to the upper right or lower right direction may be extracted.

The digital single lens reflex camera that is capable of taking a moving image has been on the market these days. Since the user zooms the lens by turning a front lens, motion of rotating on the same surface (roll) are added to the camera when the user zooms the lens. Therefore, as the region suffering from the camera shake caused by a movement of zooming operation on the camera, the region in which the locus of the center point coordinates extends in the rotating direction may be extracted.

Although the group of frames to be deleted is extracted after the mosaicking process completed in the embodiment, the group of frames to be deleted may be extracted first and then the synthesized image may be generated by using only the group of frames to be synthesized, provided that the process can generate the synthesized image excluding the image possibly unintended by the user.

Although the group of frames to be deleted is extracted and the image is synthesized only by using the coordinates of the frames, i.e., on a two-dimensional coordinate system in the embodiment, a three-dimensional coordinate system that takes the depth into account can be used in extracting the group of frames to be deleted and synthesizing the image. The depth may be relatively compensated based on the size of the object or the like, or absolutely compensated based on the focal length or the like. For example, the video camera may be moved in the depth direction when the user operates the record stop button on the front side of the camera. In such a case, by taking account of the coordinates in the depth direction, the region in which the locus of the center point coordinates extends in the depth direction may be extracted as the group of frames to be deleted.

Although an image which overlaps with the image to be synthesized is removed from the objects to be deleted as shown in Fig. 9 in the embodiment, the image to be removed from the objects to be deleted is not limited to one.

The present invention can be applied not only to a PC but also to an apparatus such as an imaging apparatus and a handheld terminal. Also, the present invention can be provided not only as an apparatus such as the PC but also as a program to be applied to the apparatus such as the PC, imaging apparatus, and personal digital assistant, a computer program product or a computer readable recording medium in which the program is stored.

## Claims

1. An image processing apparatus (1), comprising:
an obtaining device (102) for obtaining a series of images taken by serially picking up images of an object; and
a mosaicking process device (132) for generating a synthesized image by combining the series of images obtained by the obtaining device;
wherein the mosaicking process device comprises:
a coordinate obtaining device (132) for obtaining representative coordinates for each one of the series of images obtained by the obtaining device;
an extracting device (132) for extracting an image to be excluded from objects of a mosaicking process from the series of images obtained by the obtaining device, based on a locus of the representative coordinates of each image obtained by the coordinate obtaining device; and
a synthesized image generating device (132) for generating an image that is the series of images excluding the image extracted by the extracting device combined as the synthesized image.

2. The image processing apparatus according to claim 1, wherein the extracting device extracts an image contained in a region in which the locus of the representative coordinates changes as large as or larger than a predetermined extent, as the image to be excluded.

3. The image processing apparatus according to claim 1 or 2, wherein the extracting device searches for a region in which the locus of the representative coordinates changes from a predetermined direction to another direction different from the predetermined direction in the locus of the representative coordinates for images in a predetermined range from an image taken last in the series of images obtained by the obtaining device, and extracts all images contained in the region and thereafter as the images to be excluded.

4. The image processing apparatus according to any one of claims 1 to 3, wherein
the coordinate obtaining device obtains coordinates of each one of four corners for each one of the series of images,
the synthesized image generating device comprises a determining device for determining whether two of images other than the images extracted to be excluded from the objects of the mosaicking process overlap each other at least partly or not, based on the coordinates of four corners obtained by the coordinate obtaining device, wherein the two images are adjacent to the extracted image, and
when the determining device determines that two adjacent images overlap each other at least partly, the synthesized image generating device combines the two adjacent images.

5. The image processing apparatus according to claim 4, further comprising
a device (132) for selecting an image that overlaps both of the two adjacent images at least partly from the images to be excluded from the objects of the mosaicking process, when the determining device determines that two adjacent images do not overlap each other even partly,
wherein the extracting device removes the selected image from the images to be excluded from the objects of the mosaicking process and treats the remaining images as the images to be excluded from the objects of the mosaicking process.

6. The image processing apparatus according to any one of claims 1 to 5, further comprising an outputting device (102, 116, 3) for outputting the synthesized image generated by the synthesized image generating device to a monitor (118) or a paper medium.

7. An imaging apparatus comprising:
the image processing apparatus according to any one of claims 1 to 6; and
an image pickup device for picking up an image of an object.

8. An image processing method, comprising the steps of:
obtaining a series of images taken by serially picking up images of an object;
generating a synthesized image by combining the obtained series of images;
obtaining representative coordinates of each one of the obtained series of images;
extracting an image to be excluded from objects of a mosaicking process from the obtained series of images, based on a locus of the representative coordinates showing how the representative coordinates of the obtained images vary; and
excluding the extracted image from the generated synthesized image.

9. A computer program product comprising: a computer readable storage medium having computer-readable program code embodied therein, the computer readable program code comprising:
computer-readable program code for causing a computer (1) to obtain a series of images taken by serially picking up images of an object;
computer-readable program code for causing the computer to generate a synthesized image by combining the obtained series of images;
computer-readable program code for causing the computer to obtain representative coordinates of each one of the obtained series of images;
computer-readable program code for causing the computer to extract an image to be excluded from objects of a mosaicking process from the obtained series of images, based on a locus of the representative coordinates showing how the representative coordinates of the obtained images vary; and
computer-readable program code for causing the computer to exclude the extracted image from the generated synthesized image.
